# EUROPÄISCHE PATENTSCHRIFT

(11) **EP 2 672 431 B1**
(45) Veröffentlichungstag und Bekanntmachung des Hinweises auf die Patenterteilung: **16.11.2016**
(21) Anmeldenummer: 13003429.1
(22) Anmeldetag: 12.09.2007
(51) Int. Cl.: G06K 19/077, G07D 7/00

(54) **Datenträger mit Transponder**
Data carrier comprising a transponder
Porteur de données comportant un transpondeur

(30) Priorität: 13.09.2006 DE 102006043021
(43) Veröffentlichungstag der Anmeldung: 11.12.2013
(62) Teilanmeldung aus: 07802285.2
(73) Patentinhaber: Giesecke & Devrient GmbH, 81677 München (DE)
(72) Erfinder: Finkenzeller, Klaus, 85774 Unterföhring (DE); Kluge, Stefan, 80997 München (DE)

(56) Entgegenhaltungen:
- EP-A- 1 770 605
- FR-A- 2 855 637
- US-A1- 2005 161 501

## Beschreibung

Die Erfindung bezieht sich auf einen Datenträger mit Transponder sowie ein Verfahren zur Herstellung des Datenträgers oder eines Datenträgerhalbzeugs mit einer Antennenstruktur für den Transponder.

Als Transponder bezeichnet man gemeinhin die Kombination eines integrierten Schaltkreises und einer mit dem integrierten Schaltkreis elektrisch gekoppelten, eine Antenne bildenden Struktur, die zur kontaktlosen Daten- und/ oder Energieübertragung zwischen dem integrierten Schaltkreis und einem externen Lesegerät dient. Derartige Transponder werden beispielsweise in kontaktlos betreibbaren, sogenannten "kontaktlosen", Chipkarten eingesetzt, die als Ausweiskarten, Scheckkarten, Kreditkarten, Telefonkarten und dergleichen Verwendung finden. Es ist aber auch bekannt, Transponder in andersartigen Wert- oder Sicherheitsdokumenten einzusetzen, beispielsweise in Banknoten, Fahrkarten, Visa-Stickern, Sicherheitslabeln, Diebstahlsicherungsetiketten, Transportbegleitdokumenten und dergleichen.

Die vorgenannten Chipkarten und Dokumente sind "Datenträger" im Sinne der vorliegenden Erfindung, weil entweder in einem Speicher des integrierten Schaltkreises oder visuell sichtbar auf dem Datenträger Daten in irgendeiner Form hinterlegt sind oder hinterlegt werden sollen. Der Datenträger kann jede beliebige standardisierte oder nicht standardisierte Gestalt haben, insbesondere die Gestalt einer flachen Chipkarte ohne Norm oder nach einer Norm wie z.B. ISO 7810 (z.B. ID-1, ID-00, ID-000) oder die eines volumigen Tokens. Zusätzlich zu der Antennenstruktur als kontaktlose Schnittstelle kann ein solcher Datenträger eine kontaktbehaftete Schnittstelle besitzen (Dual-Interface-Datenträger).

Es ist ein grundsätzliches Anliegen, derartige Datenträger gegen Nachahmung zu schützen. In diesem Zusammenhang ist es bekannt, einen oder mehrere Sicherheitsfäden auf den Datenträger aufzubringen oder in den Datenträger einzulagern. Die Sicherheitsfadentechnologie stammt ursprünglich aus dem Bereich der Sicherheitspapiere, insbesondere Banknoten. Dort sind die Sicherheitsfäden in Papier eingelassen und in Durchsicht sichtbar. Es ist auch bekannt, den Sicherheitsfaden wellenförmig im Papier einzulagern, so dass er zumindest auf einer oder ggf. auch auf beiden Seiten des Dokuments in regelmäßigen Abständen an die Oberfläche tritt. Ein solcher Faden wird als einseitiger oder, wenn er abwechselnd an gegenüberliegenden Seiten des Dokuments an die Oberfläche tritt, als beidseitiger Fensterfaden bezeichnet. Breite Sicherheitsfäden werden auch als Sicherheitsbänder bezeichnet. Sicherheitsfäden oder -bänder im Sinne der vorliegenden Erfindung sind solche, die ganz und/ oder teilweise in Draufsicht und/ oder in Durchsicht am bzw. im Datenträger sichtbar sind, so dass sie ein visuell prüfbares Sicherheitsmerkmal darstellen. Es ist auch bekannt, die Sicherheitsfäden oder - bänder als Sicherheitsstreifen aus das Wertdokument aufzubringen.

Das Ein- und Aufbringen von Sicherheitsfäden, -bändern und -streifen ist aber nicht auf Banknoten und ähnliche papierene Wertdokumente beschränkt, sondern erstreckt sich auch auf Datenträger aus Kunststoff, insbesondere Chipkarten. In DE 10134 817 A1 wird beschrieben, wie ein Sicherheitsfaden in einen solchen kartenförmigen Datenträger oder ein Folienhalbzeug dafür, welches anschließend mit weiteren Folien unter Druck und Temperatur laminiert bzw. verschweißt wird und aus dem anschließend die Karte in ihren endgültigen Abmessungen herausgetrennt wird, beschrieben. Dazu werden Laschen bildende Konturen in die Folie eingestanzt, die so erzeugten Laschen aus der Folienebene herausgebogen, der Sicherheitsfaden unter die aus der Folienebene herausgebogenen Laschen gelegt und die Laschen anschließend wieder in die Folienebene zurückbewegt. Dadurch lässt sich der Sicherheitsfaden wellenförmig in die Folie integrieren und tritt an beiden Seiten im Sinne eines beidseitigen Fensterfadens abwechseln auf einander gegenüberliegenden Seiten der Folie zutage. Der Sicherheitsfaden ist somit senkrecht zur Folienebene gewellt. Er kann in transparente oder opake Folien eingezogen werden, sollte aber bei der fertigen Karte zumindest von einer Seite sichtbar sein, so dass anhand der optischen Beurteilung festgestellt werden kann, dass der Faden im Herstellungsprozess der Karte eingearbeitet wurde.

In der Regel sind Sicherheitsfäden, -bänder oder -streifen mehrschichtig ausgebildet und umfassen eine Trägerfolie und eine auf die Trägerfolie aufgebrachte Metallisierung, wodurch der Faden elektrisch leitfähig ist. Die elektrische Leitfähigkeit stellt ein maschinell prüfbares Sicherheitsmerkmal dar. Der Faden kann mit zahlreichen weiteren Sicherheitsmerkmalen versehen sein. Beispielsweise können in der Metallisierung Zeichen und Muster ausgespart sein, die eine Negativschrift bilden, welche besonders gut in Durchsicht erkennbar ist, wenn die Trägerfolie transparent ist (DE 40 41 025 A1). In der DE 101 11 848 A1 werden verschiedene Möglichkeiten beschrieben, wie durch Kombination von metallisierten Flächen, Flächenbrillanz, elektrisch leitfähigen Flächen und Flächenwiderstandsänderungen für einen potentiellen Fälscher nicht überwindbare technologische Hürden aufgebaut werden können. Dabei kann das Trägersubstrat für die einzelnen Sicherheitsmerkmale eine Kunststoff- oder Metallfolie, Papier, Pappe und Textilgewebe sein. Auch kann der Sicherheitsfaden einer Banknote als Dipolantenne eingesetzt werden und zur Stromversorgung elektrischer Komponenten dienen, wie in der DE 101 632 66 A1 beschrieben.

Aus der FR 2 855 637 A ist ein Datenträger bzw. ein Datenträgerhalbzeug bekannt, welches eine Antennenspule mit zwei Spulenenden umfasst, wobei die Spulenenden durch die Windungen voneinander getrennt sind. Über den Windungen der Antennenspule ist eine Leiterbrücke angeordnet, die ein Spulenende zurückführt, indem sie die Windungen überbrückt.

Aufgabe der vorliegenden Erfindung ist es, Maßnahmen vorzuschlagen, um den Schutz von Datenträgern mit Transponder gegen Fälschung zu erhöhen.

Diese Aufgabe wird erfindungsgemäß durch einen Datenträger und ein Verfahren zur Herstellung des Datenträgers oder eines Datenträgerhalbzeugs mit den Merkmalen der unabhängigen Ansprüche gelöst. In davon abhängigen Ansprüchen sind vorteilhafte Weiterbildungen und Ausgestaltungen der Erfindung angegeben.

Dementsprechend ist vorgesehen, dass die Struktur der Transponderantenne des Transponders in einem Abschnitt unterbrochen ist und dass dieser Abschnitt durch eine separate Leiterbrücke vervollständigt ist. Während dies grundsätzlich bekannt ist für eine Transponderantenne, die als Antennenspule mit mehreren Windungen ausgebildet ist und deren eines Spulenende über die Windungen der Antennenspule in Richtung zum anderen Ende der Antennenspule zurückgeführt wird, liegt das Besondere der vorliegenden Erfindung darin, dass diese Leiterbrücke durch ein elektrisch leitfähiges Element gebildet wird, welches sich von einer Kante des Datenträgers zu einer anderen Kante des Datenträgers erstreckt, insbesondere durch einen in den Datenträger oder in eine Schicht des Datenträgers integrierten Sicherheitsfaden oder Sicherheitsband oder durch ein auf den Datenträger oder auf eine Schicht des Datenträgers applizierten Sicherheitsstreifen.

Der besondere Vorteil dieser Anordnung besteht darin, dass das sich über den gesamten Datenträger erstreckende, elektrisch leitfähige Element zwei Funktionalitäten übernimmt, nämlich einerseits die Leiterbrücke bildet und andererseits ein maschinell überprüfbares Sicherheitsmerkmal darstellt, wie dies z.B. von herkömmlichen metallisierten Sicherheitsfäden bekannt ist. Während herkömmliche metallisierte Sicherheitsfäden häufig durch einen entsprechenden Aufdruck zumindest optisch nachgeahmt werden konnten, wird ein solcher Fälschungsversuch bei dem erfindungsgemäßen Datenträger dadurch erschwert, dass der Transponder funktionsuntüchtig ist, wenn nicht auch die elektrische Funktionalität des Sicherheitselements gegeben ist.

Besonders vorteilhaft ist die Erfindung im Zusammenhang mit Transpondern, deren Antenne als Antennenspule, insbesondere als eine Antennenspule mit mehreren Windungen, ausgebildet ist. Bei derartigen Antennen sind die beiden Spulenenden durch die Windungen der Spule voneinander getrennt. Mittels einer Leiterbrücke wird ein Spulenende über diese Windungen zurückgeführt, so dass zwei Spulenenden innerhalb oder außerhalb der Spule vorliegen, an die der integrierte Schaltkreis angeschlossen wird. Diese Leiterbrücke wird nun vorteilhaft durch das sich über den Datenträger erstreckende elektrisch leitfähige Element gebildet. Um einen Kurzschluss zwischen dem elektrisch leitfähigen Element und den zu überbrückenden Windungen der Antennenspule zu verhindern, wird dazwischen eine Passivierungsschicht vorgesehen. Je nach dem, ob zuerst die Antennenstruktur oder das elektrisch leitfähige Element appliziert wird, wird die Passivierungsschicht entweder nach Aufbringen der Antennenstruktur oder nach Aufbringen des elektrisch leitfähigen Elements aufgebracht. Anschließend kann diese Anordnung mit einer transparenten oder opaken Schutzschicht oder einer Kleberschicht abgedeckt werden. Eine Kleberschicht ist insbesondere dann zweckmäßig, wenn der Datenträger in oder auf einen zu sichernden Gegenstand aufgeklebt werden soll, wie beispielsweise im Falle eines auf ein Reisedokument aufzuklebenden Visa-Stickers.

Eine besondere Ausführungsform der Erfindung sieht vor, dass sich das elektrisch leitfähige Element wellenförmig durch den Datenträger erstreckt, insbesondere nach Art eines Fenstersicherheitsfadens. Diese Ausführungsform eignet sich besonders im Zusammenhang mit mehrwindigen Antennenspulen, wenn die beiden an den Unterbrechungsabschnitt angrenzenden Enden der Antennenstruktur an unterschiedlichen Stellen bzw. Fenstern, an denen das elektrisch leitfähige Element an eine Substratoberfläche tritt, mit dem elektrisch leitfähigen Element verbunden werden. Die elektrisch leitende Verbindung erfolgt somit an zwei voneinander beabstandeten Wellenkämmen, so dass die zu überbrückenden Windungen der Spule im Bereich eines Wellentals über das elektrisch leitfähige Element geführt werden können. Ein elektrischer Kurzschluss ist dadurch ausgeschlossen, ohne dass es einer separat aufzubringenden Passivierungsschicht im Bereich der zu überbrückenden Windungen bedarf.

Es können wiederum opake und/oder transparente Deckschichten vorgesehen werden, wobei es jedoch vorteilhaft ist, das wellenförmige elektrisch leitfähige Element als echten Fensterfaden auszubilden, der zumindest von einer und ggf. von beiden Seiten des Trägers aus visuell erkennbar ist, um auch ein optisch überprüfbares Sicherheitsmerkmal zu bieten.

Nachfolgend wird die Erfindung anhand der begleitenden Zeichnungen beispielhaft erläutert. Darin zeigen:
- Fig.1: einen Datenträger gemäß einem ersten Ausführungsbeispiel der Erfindung schematisch in Draufsicht,
- Fig. 2: den Datenträger aus Fig.1 schematisch im Querschnitt,
- Fig. 3: einen Datenträger gemäß einem zweiten Ausführungsbeispiel schematisch in Draufsicht und
- Fig. 4: den Datenträger aus Fig. 3 schematisch im Querschnitt.

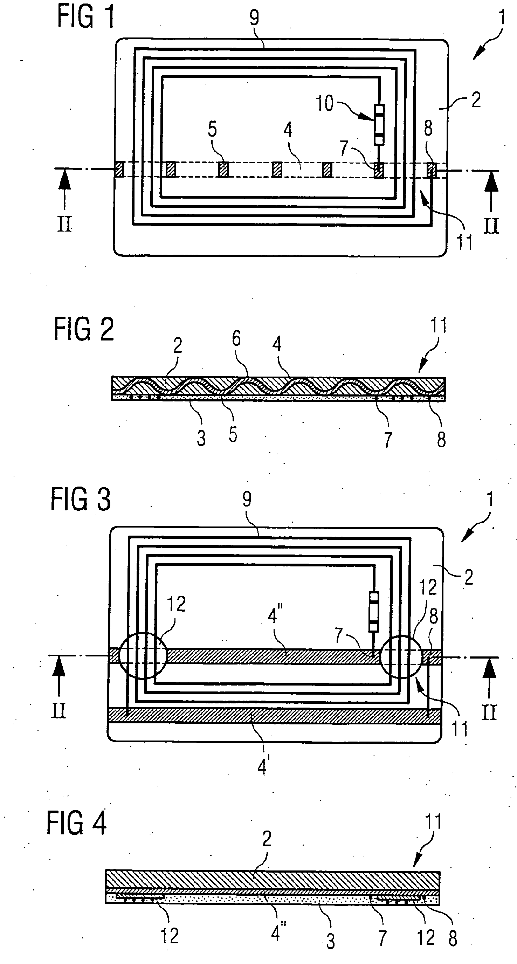

Fig. 1 zeigt ein bevorzugtes Ausführungsbeispiel der Erfindung am Beispiel eines Klebeetiketts, welches z. B. als Visa-Sticker, Produktsicherungsetikett und dergleichen eingesetzt werden kann. Der Datenträger 1 gemäß Fig. 1 ist mehrschichtig aufgebaut und weist zusätzlich zu einem Trägersubstrat 2 eine Kleberschicht 3 auf, wie anhand des Querschnitts gemäß Fig. 2 zu sehen. Je nach Anwendungsfall kann auf die Kleberschicht 3 verzichtet werden oder die Kleberschicht 3 als Schutzschicht ausgebildet und z. B. durch einen Lack gebildet werden, oder es können weitere Schichten auf der einen oder anderen Seite des Trägersubstrats 2 vorgesehen sein. Dies ist insbesondere dann der Fall, wenn der Datenträger 1 eine Kunststoffkarte, insbesondere eine Chipkarte ist, da derartige Kunststoffkarten überwiegend aus einem mehrschichtigen Folienaufbau hergestellt werden.

Das Trägersubstrat 2 des Datenträgers 1 gemäß Fig. 1 und 2 besteht hier jedoch aus Papier mit einem darin eingelegten Fensterfaden 4, der an den Stellen 5 auf einer Seite des Trägersubstrats 2 an die Oberfläche dringt. Die Abstände zwischen den Fenstern 5 sind regelmäßig, können aber auch unregelmäßig sein. Bei dem Sicherheitsfaden 4 handelt es sich um einen beidseitigen Fensterfaden, der auch auf der gegenüberliegenden Seite des Trägersubstrats 2 an den Stellen 6 an die Oberfläche tritt. Diese Fenster 6 des Sicherheitsfadens 4 sind visuell erkennbar, wenn der Datenträger mittels der Kleberschicht 3 an einem Objekt fixiert ist. Der Sicherheitsfaden 4 kann aber auch als einseitiger Fensterfaden in das papierene Trägersubstrat 2 so eingelagert werden, dass die Fenster 6 nicht entstehen, oder die Oberfläche des Trägersubstrats kann opak bedruckt, versiegelt oder mit einer opaken Folie laminiert werden, um die Fensterbereiche 6 des beidseitigen Fensterfadens 4 abzudecken.

Der Fensterfaden 4 ist zumindest auf der Seite elektrisch leitend, also beispielsweise metallisiert oder mit einer elektrisch leitfähigen Farbe bedruckt, die in den Fenstern 5 des Trägersubstrats 2 an die Oberfläche tritt. Zwei unterschiedliche Fenster 5 bilden Anschlussflächen 7 und 8 zur Kontaktierung zweier Enden einer Antennenspule 9, die zusammen mit einem Transponderchipmodul 10 einen Transponder bildet. Die an die Kontaktbereiche 7 und 8 angrenzenden Enden der Antennenspule 9 definieren eine Unterbrechung in der Antennenspule 9. Diese Unterbrechung wird durch den galvanisch leitenden Sicherheitsfaden 4 überbrückt. Der galvanische Sicherheitsfaden 4 bildet somit eine Leiterbrücke 11 für den Unterbrechungsabschnitt. Im Bereich der Leiterbrücke 11 verlaufen zwischen den Kontaktflächen 7 und 8 der Antennenspule 9 die Windungen der Antennenspule 9. Ein Kurzschluss der Windungen mit dem Sicherheitsfaden 4 ist ausgeschlossen, da sich der Sicherheitsfaden 4 wellenförmig durch den Datenträger erstreckt und im Bereich zwischen den Fenstern 5 nicht an die Trägersubstratoberfläche tritt. Sofern die nicht als Kontaktflächen genutzten Fensterbereiche 5 nicht durch geeignete Maßnahmen, z. B. eine Schutzlackschicht, gegen eine unbeabsichtigte elektrische Kontaktierung geschützt sind, sind die Windungen der Antennenspule 9 an der anderen Seite des Datenträgers 1 selbstverständlich ebenfalls zwischen den Fenstern 5 hindurchzuführen, wie in Fig. 1 und 2 gezeigt.

Wenn die Antennenspule nur eine einzelne Windung besitzt, kann ein einzelnes Fenster zur Kontaktierung beider an den Unterbrechungsabschnitt angrenzenden Enden der Antennenspule 9 angeschlossen werden. In diesem Falle ist es auch möglich, den Sicherheitsfaden nicht als Fensterfaden in das Trägersubstrat 2 einzulagern, sondern als Sicherheitsstreifen auf die Oberfläche des Trägersubstrats 2 aufzubringen. Insofern der Sicherheitsfaden bei dieser Ausführungsvariante die Spule quert, ergeben sich zwei Unterbrechungsstellen, für die der Sicherheitsfaden eine Leiterbrücke bildet. Gemäß einem nicht erfindungsgemäßen Beispiel kann der auf das Trägersubstrat 2 aufgebrachte Sicherheitsfaden 4 eine Seite der Spulenwindung vollständig ersetzen. Dies ist in Fig. 3 anhand des Sicherheitsfadens 4' dargestellt.

Fig. 3 und 4 zeigen ein zweites Ausführungsbeispiel der Erfindung mit zwei auf das Trägersubstrat 2 aufgebrachten Sicherheitsstreifen, nämlich dem bereits genannten Sicherheitsstreifen 4' und dem weiteren Sicherheitsstreifen 4". Da die Antennenspule 9 hier, wie in Fig. 1, mehrere Windungen besitzt, ist es notwendig, den Sicherheitsstreifen 4" gegenüber den überbrückten Windungen der Antennenspule 9 im Bereich der Leiterbrücke 11 zu isolieren. Dazu dient eine lokal aufgebrachte, elektrisch isolierende Passivierungsschicht 12, die beispielsweise aufgedruckt werden kann, bevor der Sicherheitsstreifen 4" appliziert wird. Der Sicherheitsstreifen 4" kann auch nach Aufbringen der Spule appliziert werden. In diesem Falle ist die Passivierungsschicht 12 nach der Herstellung der Antennenspule 9 und vor dem Aufbringen des Sicherheitsstreifens 4" vorzusehen.

Die Windungen der Antennenspule 9 werden bevorzugt durch ein Druckverfahren, beispielsweise im Siebdruckverfahren mittels leitfähiger Farbe, durch ein Ätzverfahren, beispielsweise durch Belichten und Ätzen einer kupferkaschierten Folie, durch das Aufbringen und Metallisieren von Waschfarben oder durch ein ähnliches Verfahren hergestellt.

Die Datenträger bzw. das für die Datenträger bestimmte Halbzeug können in großer Anzahl zunächst als Rollenware oder Bogenmaterial hergestellt werden und anschließend aus den Rollen oder Bögen herausgeteilt, insbesondere herausgestanzt werden. Es kann aber von Vorteil sein, insbesondere wenn der Sicherheitsfaden oder -streifen als Fensterfaden ausgebildet ist, die Rollenware bzw. das Bogenmaterial zunächst so zuzuschneiden, dass der Fensterfaden 4 und insbesondere die Fensteröffnungen 13 an den später zur Kontaktierung benötigten Positionen 7, 8 zu liegen kommen. Anschließend werden in einem geeigneten Automaten zunächst die Passivierungsschichten 12 und dann die Spulenwindungen der Antennenspule 9 z. B. aufgedruckt, wobei die Spulenwindungen an den Stellen, an denen ein elektrischer Kontakt mit dem Fensterfaden 4 gewünscht ist, direkt auf die in den Fensteröffnungen 5 offenliegende Metallbeschichtung des Fadens 4 gedruckt wird. Zwischen den dadurch entstehenden Kontaktstellen 7, 8 besteht eine galvanisch leitfähige Verbindung, wodurch die benötigte Leitungsbrücke 11 gebildet wird.

## Patentansprüche

1. Datenträger oder Datenträgerhalbzeug, umfassend einen Transponder (9,10) mit einer Transponderantenne (9), deren Struktur in einem Unterbrechungsabschnitt durch eine separate Leiterbrücke (11) vervollständigt ist, wobei die Transponderantenne (9) als Antennenspule ausgebildet ist und wobei die Antennenspule (9) mehrere Windungen besitzt und die Leiterbrücke (11) die Windungen überbrückt, **dadurch gekennzeichnet, dass** die Leiterbrücke (11) durch ein sich von einer Kante zu einer anderen Kante des Datenträgers bzw. Datenträgerhalbzeugs erstreckendes, elektrisch leitfähiges Element (4; 4'; 4'') gebildet wird, wobei das elektrisch leitfähige Element (4; 4'; 4") ein Sicherheitsfaden oder Sicherheitsband (4) oder ein Sicherheitsstreifen (4'; 4") ist.

2. Datenträger bzw. Datenträgerhalbzeug nach Anspruch 1, wobei sich das elektrisch leitfähige Element (4) wellenförmig durch den Datenträger bzw. das Datenträgerhalbzeug erstreckt.

3. Datenträger bzw. Datenträgerhalbzeug nach Anspruch 2, wobei Bereiche (5, 6) des wellenförmigen Elements (4) zumindest von einer Seite des Datenträgers bzw. Datenträgerhalbzeugs aus visuell erkennbar sind.

4. Datenträger bzw. Datenträgerhalbzeug nach Anspruch 2, wobei Bereiche (5, 6) des wellenförmigen Elements (4) von einander gegenüberliegenden Seiten des Datenträgers bzw. Datenträgerhalbzeugs aus visuell erkennbar sind.

5. Datenträger bzw. Datenträgerhalbzeug nach Anspruch 1, wobei das elektrisch leitfähige Element (4'; 4") flächig auf dem Datenträger bzw. Datenträgerhalbzeug oder auf einer Schicht (2) des Datenträgers bzw. Datenträgerhalbzeugs aufgebracht ist.

6. Datenträger bzw. Datenträgerhalbzeug nach Anspruch 1, wobei eine separate Passivierungsschicht (12) zwischen dem elektrisch leitfähigen Element (4") und den überbrückten Windungen vorgesehen ist.

7. Datenträger bzw. Datenträgerhalbzeug nach einem der Ansprüche 1 bis 6, wobei der Datenträger ein Wert- oder Sicherheitsdokument, insbesondere Banknote, Chipkarte, Visa-Sticker, Produktsicherungsetikett oder dergleichen, ist.

8. Verfahren zur Herstellung eines Datenträgers oder eines Datenträgerhalbzeugs, umfassend einen Transponder (9,10) mit einer Transponderantenne (9), deren Struktur in einem Unterbrechungsabschnitt durch eine separate Leiterbrücke (11) vervollständigt ist, wobei die Transponderantenne (9) als Antennenspule ausgebildet ist und wobei die Antennenspule (9) mehrere Windungen besitzt und die Leiterbrücke (11) die Windungen überbrückt, **dadurch gekennzeichnet, dass** die Leiterbrücke (11) durch ein sich von einer Kante zu einer anderen Kante des Datenträgers bzw. Datenträgerhalbzeugs erstreckendes, elektrisch leitfähiges Element (4; 4'; 4") gebildet wird, wobei das elektrisch leitfähige Element (4; 4'; 4") ein Sicherheitsfaden oder Sicherheitsband (4) oder ein Sicherheitsstreifen (4'; 4") ist.

9. Verfahren nach Anspruch 8, wobei das Verfahren den weiteren Schritt des Zuschneidens des Trägersubstrats (2) aus Rollenware oder Bogenmaterial vor dem Aufbringen der Antennenspule (9) umfasst.

10. Verfahren nach einem der Ansprüche 8 oder 9, wobei das elektrisch leitfähige Element (4'; 4") flächig auf das Trägersubstrat (2) aufgebracht wird.

11. Verfahren nach einem der Ansprüche 8 bis 10, wobei das Verfahren den weiteren Schritt des Verbindens des elektrisch leitfähigen Elements (4; 4'; 4") mit dem Trägersubstrat (2) vor dem Aufbringen der Antennenspule (9) auf das Substrat (2) umfasst.

12. Verfahren nach einem der Ansprüche 8 bis 10, wobei das Verfahren den weiteren Schritt des Verbindens des elektrisch leitfähigen Elements (4; 4'; 4") mit dem Trägersubstrat (2) nach dem Aufbringen der Antennenspule (9) auf das Substrat (2) umfasst.

13. Verfahren nach einem der Ansprüche 8 bis 12, wobei der Datenträger ein Wert- oder Sicherheitsdokument, insbesondere Banknote, Chipkarte, Visa-Sticker, Produktsicherungsetikett oder dergleichen, ist.

## Claims

1. A data carrier or semi-finished data carrier, comprising a transponder (9, 10) with a transponder antenna (9), the structure of which is completed in an interruption section by a separate conductor bridge (11),
wherein the transponder antenna (9) is configured as an antenna coil and wherein the antenna coil (9) has a plurality of windings and the conductor bridge (11) bridges the windings, **characterized in that** the conductor bridge (11) is formed by an electroconductive element (4; 4'; 4") extending from one edge to another edge of the data carrier or semi-finished data carrier,
wherein the electroconductive element (4; 4'; 4") is a security thread or security band (4) or a security strip (4'; 4").

2. The data carrier or semi-finished data carrier according to claim 1, wherein the electroconductive element (4) extends in a wave shape through the data carrier or the semi-finished data carrier.

3. The data carrier or semi-finished data carrier according to claim 2, wherein regions (5, 6) of the wave-shaped element (4) are visually recognizable at least from one side of the data carrier or semi-finished data carrier.

4. The data carrier or semi-finished data carrier according to claim 2, wherein regions (5, 6) of the wave-shaped element (4) are visually recognizable from mutually opposing sides of the data carrier or semi-finished data carrier.

5. The data carrier or semi-finished data carrier according to claim 1, wherein the electroconductive element (4'; 4") is applied areally to the data carrier or semi-finished data carrier or to a layer (2) of the data carrier or semi-finished data carrier.

6. The data carrier or semi-finished data carrier according to claim 1, wherein a separate passivation layer (12) is provided between the electroconductive element (4") and the bridged windings.

7. The data carrier or semi-finished data carrier according to any of the claims 1 to 6, wherein the data carrier is a value document or security document, in particular a banknote, chip card, visa sticker, product security label or the like.

8. A method for manufacturing a data carrier or a semi-finished data carrier, comprising a transponder (9, 10) with a transponder antenna (9) the structure of which is completed in an interruption section by a separate conductor bridge (11),
wherein the transponder antenna (9) is configured as an antenna coil and wherein the antenna coil (9) has a plurality of windings and the conductor bridge (11) bridges the windings, **characterized in that** the conductor bridge (11) is formed by an electroconductive element (4; 4'; 4") extending from one edge to another edge of the data carrier or semi-finished data carrier,
wherein the electroconductive element (4; 4'; 4") is a security thread or security band (4) or a security strip (4'; 4").

9. The method according to claim 8, wherein the method comprises the further step of cutting to size the carrier substrate (2) from rolled goods or sheet material before applying the antenna coil (9).

10. The method according to any of the claims 8 or 9, wherein the electroconductive element (4'; 4") is applied areally to the carrier substrate (2).

11. The method according to any of the claims 8 to 10, wherein the method comprises the further step of connecting the electroconductive element (4; 4'; 4") with the carrier substrate (2) before applying the antenna coil (9) to the substrate (2).

12. The method according to any of the claims 8 to 10, wherein the method comprises the further step of connecting the electroconductive element (4; 4'; 4") with the carrier substrate (2) after applying the antenna coil (9) to the substrate (2).

13. The method according to any of the claims 8 to 12, wherein the data carrier is a value document or security document, in particular a banknote, chip card, visa sticker, product security label or the like.

## Revendications

1. Support de données ou support de données semi-fini, comprenant un transpondeur (9, 10) ayant une antenne de transpondeur (9) dont la structure est complétée, dans une section d'interruption, par un pont conducteur (11) distinct,
l'antenne de transpondeur (9) étant réalisée sous forme de bobine d'antenne et la bobine d'antenne (9) possédant plusieurs enroulements et le pont conducteur (11) pontant les enroulements, **caractérisé en ce que** le pont conducteur (11) est constitué par un élément (4; 4'; 4") électriquement conducteur s'étendant d'un bord à un autre bord du support de données ou support de données semi-fini,
l'élément électriquement conducteur (4; 4'; 4") étant un fil de sécurité ou bande de sécurité (4) ou un ruban de sécurité (4'; 4").

2. Support de données ou support de données semi-fini selon la revendication 1, l'élément électriquement conducteur (4) s'étendant de manière ondulée à travers le support de données ou support de données semi-fini.

3. Support de données ou support de données semi-fini selon la revendication 2, des zones (5, 6) de l'élément ondulé (4) étant visuellement reconnaissables au moins depuis un côté du support de données ou support de données semi-fini.

4. Support de données ou support de données semi-fini selon la revendication 2, des zones (5, 6) de l'élément ondulé (4) étant visuellement reconnaissables au moins depuis des côtés opposés du support de données ou support de données semi-fini.

5. Support de données ou support de données semi-fini selon la revendication 1, l'élément électriquement conducteur (4'; 4") étant appliqué de manière plane sur le support de données ou support de données semi-fini ou sur une couche (2) du support de données ou support de données semi-fini.

6. Support de données ou support de données semi-fini selon la revendication 1, une couche distincte de passivation (12) étant prévue entre l'élément électriquement conducteur (4") et les enroulements pontés.

7. Support de données ou support de données semi-fini selon une des revendications de 1 à 6, le support de données étant un document de valeur ou de sécurité, en particulier un billet de banque, carte à puce, vignette-visa, étiquette de sécurisation de produit ou objet similaire.

8. Procédé de fabrication d'un support de données ou d'un support de données semi-fini comprenant un transpondeur (9, 10) ayant une antenne de transpondeur (9) dont la structure est complétée dans une section d'interruption par un pont conducteur (11) distinct,
l'antenne de transpondeur (9) étant réalisée sous forme de bobine d'antenne et la bobine d'antenne (9) possédant plusieurs enroulements et le pont conducteur (11) pontant les enroulements, **caractérisé en ce que** le pont conducteur (11) est constitué par un élément (4; 4'; 4") électriquement conducteur s'étendant d'un bord à un autre bord du support de données ou support de données semi-fini,
l'élément électriquement conducteur (4; 4'; 4") étant un fil de sécurité ou bande de sécurité (4) ou un ruban de sécurité (4'; 4").

9. Procédé selon la revendication 8, le procédé comprenant l'étape supplémentaire de la découpe du substrat porteur (2) à partir de matière en rouleau ou de matériau en feuille avant l'application de la bobine d'antenne (9).

10. Procédé selon une des revendications 8 ou 9, l'élément électriquement conducteur (4'; 4") étant appliqué de manière plane sur le substrat porteur (2).

11. Procédé selon une des revendications de 8 à 10, le procédé comprenant l'étape supplémentaire de la liaison de l'élément électriquement conducteur (4; 4'; 4") au substrat porteur (2) avant l'application de la bobine d'antenne (9) sur le substrat (2).

12. Procédé selon une des revendications de 8 à 10, le procédé comprenant l'étape supplémentaire de la liaison de l'élément électriquement conducteur (4; 4'; 4") au substrat porteur (2) après l'application de la bobine d'antenne (9) sur le substrat (2).

13. Procédé selon une des revendications de 8 à 12, le support de données étant un document de valeur ou de sécurité, en particulier un billet de banque, carte à puce, vignette-visa, étiquette de sécurisation de produit ou objet similaire.
